**Europäisches Patentamt**

(19) **European Patent Office**

**Office européen des brevets**

(11) Veröffentlichungsnummer: **0 032 724**
**B1**

(12) **EUROPÄISCHE PATENTSCHRIFT**

(45) Veröffentlichungstag der Patentschrift:
27.07.83

(51) Int. Cl.³: **C 08 F 14/06, C 08 F 2/20**

(21) Anmeldenummer: **81100267.4**

(22) Anmeldetag: **15.01.81**

(54) Verfahren zur Herstellung von staubfreiem Polyvinylchlorid mit verbesserten Eigenschaften.

(30) Priorität: **17.01.80 DE 3001517**

(43) Veröffentlichungstag der Anmeldung:
**29.07.81 Patentblatt 81/30**

(45) Bekanntmachung des Hinweises auf die Patenterteilung:
**27.07.83 Patentblatt 83/30**

(84) Benannte Vertragsstaaten:
**BE CH DE FR GB IT LI NL SE**

(56) Entgegenhaltungen:
**EP-A-0 002 861**
**DE-A-2 357 587**
**FR-A-2 341 600**

(73) Patentinhaber: **WACKER-CHEMIE GMBH,**
**Prinzregentenstrasse 22, D-8000 München 22 (DE)**

(72) Erfinder: **Bauer, Johann, Dr. Dipl.-Chem.,**
**Görresstrasse 3, D-8263 Burghausen (DE)**
**Erfinder: Sabel, Alex, Dr. Dipl.-Chem., Baaderstrasse 8,**
**D-8263 Burghausen (DE)**
**Erfinder: Heisler, Manfred, Dr. Dipl.-Chem.,**
**Lortzingweg 9, D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Verfahren zur Herstellung von staubfreiem Polyvinylchlorid mit verbesserten Eigenschaften

Gegenstand der Erfindung ist ein Verfahren zur Herstellung von staubfreiem Polyvinylchlorid (PVC) mit verbesserten Eigenschaften durch Homo- oder Copolymerisation von Vinylchlorid (VC) gegebenenfalls mit bis zu 40 Gew.-%, bezogen auf VC, weiterer copolymerisierbarer Vinylverbindungen nach dem Suspensionspolymerisationsverfahren in Gegenwart öllöslicher Radikalinitiatoren, von Dispersionsstabilisator und gegebenenfalls weiterer Polymerisationshilfsstoffe, das dadurch gekennzeichnet ist, daß als Dispersionsstabilisator ein oder mehrere wasserlösliche(r) Polyvinylalkohol(e) (PVAL) verwendet wird (werden), der (die) durch partielle Solvolyse von Polyvinylacetat (PVAC) in alkoholischer Lösung unter Zusatz eines Säurekatalysators hergestellt wurde(n).

Unter der Abkürzung PVC werden hier VC-Homopolymere und Copolymere des Vinylchlorids mit bis zu 40 Gew.-%, bezogen auf VC, einem oder mehreren damit copolymerisierbaren äthylenisch ungesättigten Monomeren verstanden. Solche anderen Monomeren sind z. B. Vinylester von aliphatischen, linearen und/oder verzweigten, gesättigten $C_2-C_{18}$-Carbonsäuren, Äthylen, Propylen, Acryl-, Methacryl-, Malein- und Fumarsäureester von $C_1-C_{18}$-Alkoholen, sowie ungesättigte Carbonsäuren wie Acryl-, Methacryl-, Itakon- und Crotonsäure, Malein- und Fumarsäure sowie deren Halbester.

Die Abkürzung PVC schließt ebenfalls Pfropfcopolymere zwischen VC und bis zu 50 Gew.-%, bezogen auf VC an polymerem Substrat aus einem oder mehreren der genannten Monomeren mit ein.

Es ist z. B. aus der EP-A-2 861 und der DE-A-2 653 087 bekannt, VC-Homo- und -Copolymerisate herzustellen in Gegenwart von PVAL, womit im allgemeinen partiell verseiftes PVAC bezeichnet wird.

In beiden Druckschriften wird die Suspensionspolymerisation der Monomeren in Gegenwart einer Kombination von wasserlöslichem, sogenannten primärem Schutzkolloid mit wasserunlöslichem, sogenanntem sekundärem Schutzkolloid durchgeführt. Das Sekundärschutzkolloid kann zur Herstellung eines verwertbarem S-PVCs ohne Primärschutzkolloid nicht bei diesen Verfahren eingesetzt werden.

Entsprechend der genannten EP-A wird ein Produkt hoher Porosität, großer BET-Oberfläche, enger Teilchengrößenverteilung und guter Weichmacheraufnahme erhalten, das nach der Verarbeitung nur wenige »Fischaugen« aufweist.

Das Verfahren der genannten DE-A liefert Polymere verbesserter Porosität, niedrigen Restmonomergehaltes, bröckliger Struktur und hohen Raumgewichts.

Diese Eigenschaften werden nur erreicht durch die Kombination eines üblichen wasserlöslichen Schutzkolloids — bis heute bietet der Weltmarkt keinen durch Säurehydrolyse hergestellten PVAL an, der für eine S-PVC-Herstellung geeignet wäre — mit dem jeweils anmeldungswesentlichen wasserunlöslichen Sekundärschutzkolloid.

Es wird in der EP-A erwähnt, daß PVAL durch Solvolyse von PVAC im sauren oder basischen pH-Bereich hergestellt werden kann, die näher beschriebene Herstellung des Sekundärschutzkolloids erfolgt aber ausschließlich im alkalischen Bereich.

Der niedrige Hydrolysegrad des wasserunlöslichen PVAC wird entweder durch frühzeitiges Abstoppen der Solvolyse erreicht, das aber wegen dieser sehr schnell ablaufenden Reaktion laut EP-OS ein sehr inhomogenes schlechtes Schutzkolloid ergibt, oder aber durch komplizierte Verseifungsbedingungen, die in der genannten Druckschrift eingehend beschrieben werden.

In der DE-A ist lediglich auf die Möglichkeit verwiesen, das Sekundärschutzkolloid durch sauer oder alkalisch katalysierte Verseifung herzustellen, die aber, wie vorstehend beschrieben, frühzeitig abgestoppt werden muß. Die weiteren Ausführungen in der genannten DE-A, z. B. daß das dort hergestellte Polymere, das an den Reaktorwänden anhaftet, stärker bröckelt, weist darauf hin, daß es einen großen Staubanteil enthält.

Die DE-A-2 702 771 setzt bei der Suspensionspolymerisation von VC als Sekundärschutzkolloid Vinylacetat-Vinylalkohol-Blockcopolymere ein, um die noch verbesserungsbedürftige Morphologie und Korn Struktur des PVC weiter zu verbessern. Solche Blockcopolymeren stellen aber schon wegen ihrer ebenfalls komplizierten Herstellung kein für die heute übliche Massenproduktion von PVC geeignetes Schutzkolloid dar.

Im Stand der Technik war bisher noch kein Verfahren bekannt, das sich wegen seiner Einfachheit für die Massenproduktion von PVC eignet und dabei staubfreie Produkte mit verbesserten Eigenschaften liefert.

Überraschenderweise wurde nun gefunden, daß bei der Durchführung des erfindungsgemäßen Verfahrens in Gegenwart eines wasserlöslichen PVAL, der durch partielle Solvolyse von PVAC in alkoholischer Lösung unter Zusatz eines Säure-Katalysators hergestellt worden ist, als alleiniges Schutzkolloid ein VC-Polymeres ohne Feinstanteil hergestellt werden kann, das verbesserte Eigenschaften aufweist. Nach dem erfindungsgemäßen Verfahren wird also in technisch einfacher Weise ein staubfreies PVC zugänglich, das bisher ohne Siebung nicht erhalten werden konnte.

Staubanteile sind bei der PVC-Verarbeitung aus verschiedenen Gründen unerwünscht. Abgesehen von einer Arbeitsplatzbelästigung beim Hantieren mit staubendem Polymerisat ist ein Einmischen von Verarbeitungshilfsstoffen, wie Weichmacher, Stabilisator, Farbstoff und anderem, insbesondere bei flüssigen Hilfsstoffen und Zusätzen insofern erschwert, als durch unterschiedliche Adsorption von Feinstanteilen und Normalkorn eine inhomogene Verteilung dieser Stoffe zustande kommen kann. Die Auswirkung solcher Verhältnisse sind Belagbildung im Mischer, Verarbeitungsschwierigkeiten beim PVC und Qualitätseinbußen am Fertigpartikel. Ein Staubanteil im PVC ist aber auch bei einer pneumatischen Materialförderung, ohne die ein technischer Großbetrieb heute nicht mehr auskommen kann, unerwünscht, weil dabei Entmischungserscheinungen nach Art einer Windsichtung auftreten können. Auf diese Weise kommt es zu schwer kontrollierbaren Inhomogenitäten innerhalb einer Produkttype, was ebenfalls zu ernsten Verarbeitungsschwierigkeiten führen muß.

Als Folge eines fehlenden Feinstanteils im erfindungsgemäß hergestellten PVC erfährt die Verkrustung der Autoklavenwandung bei der Polymerisation, wie sie bei Verfahren nach dem Stande der Technik beinahe unvermeidbar ist, eine unerwartete Reduzierung. In technisch einfacher Weise wird so möglich, ohne zusätzlichen Verkrustungsinhibitor auszukommen. Letzterer ist häufig die Ursache für unerwünschte Verunreinigungen des Polymerisats.

Schließlich zeigt sich, daß nach Beendigung der Polymerisation gemäß der Erfindung die erforderliche Entgasung zur Beseitigung toxischer Restmonomeranteile durch ein vermindertes Schaumverhalten der Suspension im Vergleich zu Suspensionspolymerisationen mit herkömmlichen alkalisch verseiften Polyvinylalkoholen bedeutend erleichtert wird. Der Entgasungsvorgang läßt sich dadurch beschleunigen, was sich in einer Abkürzung der für die Aufarbeitung erforderlichen Zeit, einer geringeren thermischen Belastung des Rohproduktes und damit in einer Steigerung der Wirtschaftlichkeit auswirkt.

Überraschenderweise besitzt das erfindungsgemäß hergestellte Produkt auch eine verbesserte Thermostabilität, verglichen mit Produkten, die in herkömmlicher Weise durch Suspensionspolymerisation in Gegenwart alkalisch verseiftem PVAL hergestellt worden sind.

Der im erfindungsgemäßen Verfahren verwendete wasserlösliche PVAL kann der wäßrigen Phase des Polymerisationsansatzes vorzugsweise in Mengen von 0,02 bis 1,0 Gew.-%, bezogen auf VC, vor Beginn der Polymerisation zugesetzt oder ganz oder teilweise erst während der Polymerisation zudosiert werden. Selbstverständlich ist es möglich, zur Erreichung besonderer Effekte zusätzlich Sekundärschutzkolloid in Mengen bis zu maximal 1 Gew.-%, bezogen auf VC, mitzuverwenden. Vorzugsweise wird davon jedoch deutlich weniger, z. B. weniger als 0,1 Gew.-%, bezogen auf VC, eingesetzt. Eine derartige Mitverwendung ist aber zur Lösung der eingangs gestellten Aufgabe, ein staubfreies PVC mit verbesserten Eigenschaften herzustellen, nicht notwendig.

Der erfindungsgemäß eingesetzte PVAL kann beispielsweise wie folgt hergestellt werden:

Zunächst werden 10 Gew.-Teile eines niedrig- bis mittelviskosen PVAC (mit etwa 3 bis etwa 30 mPas, gemessen in 4gewichtsprozentiger wäßriger Lösung bei 20°C nach Höppler) in 40 Gew.-Teile Methanol unter Rühren gelöst. Nach Erwärmen auf 60°C werden 0,5 Gew.-Teile konzentrierte Salzsäure in 1 Gew.-Teil Methanol unter fortgesetztem Rühren zugegeben. Die nun einsetzende Solvolyse wird in ihrem Ausmaß von der Reaktionszeit bestimmt. Der Zusammenhang von Reaktionsdauer zu Hydrolysegrad läßt sich in wenigen Vorversuchen leicht ermitteln. Als qualitativer Test kann der Fortgang der Verseifung durch eine Reagenzglasprobe verfolgt werden. Wenn auf Zugabe von reichlich Wasser zur Reaktorprobe kein Niederschlag entsteht, ist in der Regel eine Verseifungszahl unter 400, entsprechend einem Hydrolysegrad von über 55 Mol-%, erreicht. Mit fortschreitender Verseifung wird die Reagenzglasprobe bei Wasserzusatz zunehmend klarer. Ein Zusatz von 50 Gew.-Teilen Wasser zum Reaktionsansatz und Neutralisation auf pH 6,5 bis 7,0 beendet zum gewünschten Zeitpunkt die Säurehydrolyse. Methanol und Methylacetat werden durch Vakuumdestillation weitgehend abgetrennt, wobei das entsprechende Volumen durch Wasserzugabe kompensiert werden kann. Es resultiert eine klare, farblose Lösung von Polyvinylalkohol in Wasser, die nach Bestimmung von Verseifungsgrad und Festgehalt in der anfallenden Form für die Vinylchlorid-Suspensionspolymerisation eingesetzt werden kann.

Die genannten Herstellungsbedingungen lassen sich selbstverständlich in weiterem Bereich variieren, ohne dadurch die spezifischen Schutzkolloideigenschaften des durch Säurehydrolyse hergestellten PVAL zu beeinflussen, soweit der genannte Bereich von Viskosität und Hydrolysegrad eingehalten wird. Höhere PVAC-Konzentrationen erhöhen die Viskosität der methanolischen Lösung. Sie muß so eingestellt werden, daß das Reaktionsgemisch noch gerührt werden kann. Die Konzentration des PVAC kann z. B. von etwa 10 bis etwa 60 Gew.-Teile je 100 Gew.-Teile $C_1-C_3$-Alkohol betragen. Sie wird um so niedriger eingestellt werden, je höher viskos das PVAC ist. Auch eine Variation der Temperatur ist selbstverständlich möglich. Niedrigere Temperaturen verlängern gewöhnlich die Reaktionszeit, und wesentlich höhere Temperaturen können wegen Siedevorgängen im Reaktor zu praktischen Schwierigkeiten führen. Auch die Konzentration des Säurekatalysators kann z. B. von 0,1 bis 5 Gew.-Teile je 100 Gew.-Teile Alkohol variiert werden. Dabei steigt im allgemeinen die Solvolysegeschwindigkeit mit zunehmender Katalysatorkonzentration an. Die gewünschte Katalysatorwirkung ist selbstverständlich nicht nur auf wäßrige anorganische Säuren wie Salzsäure, Bromwasserstoffsäure, Flußsäure, Schwefelsäure, Phosphorsäure, Perchlorsäure und ihre Gemische beschränkt. Sie können, soweit möglich und sinnvoll, auch in wasserfreier Form eingesetzt werden.

Darüber hinaus lassen sich auch andere sauer wirkende anorganische und organische Verbindungen als Katalysator verwenden, z. B. Carbonsäuren, Sulfonsäuren, Phosphonsäuren. Geeignete saure Katalysatoren können z. B. ausgewählt werden anhand der Tabellen in »Pure and Applied Chemistry« 1 (1960) 187 bis 536 und ibid. 20 (1969) 133 bis 236. Entscheidend ist, daß der pH-Wert während der Solvolyse unterhalb 6, 5, insbesondere unter 5 liegt, um zu gewährleisten, daß die Solvolyse genügend schnell abläuft. Nach Abstoppen der Solvolyse, Abdestillieren der im Reaktionsgemisch vorliegenden flüchtigen organischen Verbindungen und Ausnahme in Wasser kann der PVAL im erfindungsgemäßen Verfahren eingesetzt werden. Bevorzugt wird ein PVAL mit Viskositäten von etwa 2 bis 30, insbesondere 2 bis 10 mPas, gemessen nach Höppler in 4gewichtsprozentiger wäßriger Lösung bei 20° C, der vorzugsweise einen Hydrolysegrad von ca. 55 bis 85 Mol-%, entsprechend einer Verseifungszahl von etwa 400 bis etwa 165, besitzt.

Das erfindungsgemäße Verfahren wird in an sich bekannter Weise durchgeführt in Gegenwart von öllöslichen Radikalinitiatoren oder deren Gemischen, wie organischen Peroxiden oder Azoverbindungen, z. B. Acylperoxiden, Percarbonaten, Acylcyclohexansulfonylperoxiden, Perestern, Azocarbonsäurennitrilen usw. und gegebenenfalls bekannten Polymerisationshilfsstoffen, wobei die Konzentrationen dieser Verbindungen in den allgemein üblichen Bereichen liegen können. Geeignete, gegebenenfalls mitverwendbare Polymerisationshilfsstoffe sind z. B. Emulgatoren, Puffersubstanzen, Molekulargewichtsregler und Verkrustungsinhibitoren. Diese Hilfsstoffe sind nicht wesentlich zur Erzielung der erfindungsgemäßen Vorteile, ihre Mit- oder Nichtmitverwendung sowie der Zeitpunkte, die Art und Menge ihrer Zugabe, stellen keine entscheidenden Kriterien und damit auch keine Beschränkungen der Erfindung dar, da ihre optimalen Werte durch den Fachmann in wenigen Versuchen ermittelt werden können.

Die folgenden Beispiele und Vergleichsversuche sollen die vorliegende Erfindung näher erläutern. Die Produktanalysen wurden nach Siebanalyse, Staubtest, Preßstabilität und Ofenstabilität durchgeführt, wobei die folgenden Angaben zur Erläuterung dienen: (ppm = Gewichtsteile/$10^6$ Gewichtsteile)

Siebanalyse
Alpine-Luftstrahlsieb

Staubtest:
80 g einer getrockneten PVC-Probe wurden durch ein senkrecht aufgestelltes PVC-Rohr von 1 m Länge und 25 mm Durchmesser gerieselt. Der infolge statischer Aufladung an der Rohrwandung anhaftende Anteil wurde ausgewogen und prozentual zur Einwaage ermittelt.

Preßstabilität:
100 Gew.-Teile PVC wurden mit 50 Gew.-Teile Di-2-äthylhexylphthalat, 0,5 Gew.-Teile 3-basischem Bleisulfat (Tribase) und 0,2 Gew.-Teile Montanwachs (Wachs E) vermischt und auf einem Walzwerk 2 Minuten bei 170° C zu einem Walzfell verarbeitet. Dieses Walzfell wurde dann für die Dauer von 10 Minuten bei 180° C bzw. 190° C zu einer 1 mm starken Preßplatte verpreßt. Die infolge zu geringer Stabilisierung auftretende Verfärbung wurde farbmetrisch nach der deutschen Industrienorm DIN 6174 vermessen. Im Vergleich zu einem Meßstandard mit uneingeschränkter Transmission (Meßwert 100) geben abnehmende Zahlenwerte eine zunehmende Verfärbung an.

Ofen-Stabilität
In zwei Rezepturen A und B wurden durch 10minütiges Verwalzen bei 170° C 1 mm starke Walzfelle hergestellt, die dann bei 190° C einem Matthis-Thermotest unterzogen wurden. Hierbei wurde ein aus dem Walzfell geschnittener PVC-Streifen mit konstantem Vorschub durch einen Wärmeofen gezogen. Die Entfernung in mm vom Ausgangspunkt bis zu beginnenden Dunkelbraunfärbung ist ein Maß für die Wärmestabilität.

Vergleichsversuch A

Ein 2-m³-Rührautoklav wurde in der angegebenen Reihenfolge mit folgenden Rezepturbestandteilen beschickt:

930 Gew.-Teile   entionisiertem Wasser
2,3 Gew.-Teile   eines in 20 Gew.-Teile Wasser gelösten Polyvinylalkohols
0,15 Gew.-Teile   Natriumbicarbonat sowie
0,31 Gew.-Teile   Dicetylperoxydicarbonat

Der dem Stand der Technik entsprechende Polyvinylalkohol besaß einen Verseifungsgrad von 76 Mol-% und eine Viskosität von 5 mPas gemessen nach Höppler in 4gewichtsprozentiger wäßriger Lösung bei 20°C. Er war durch alkalische Verseifung eines PVAC mit einem durch osmotische Messung ermittelten Polymerisationsgrad von 500 hergestellt worden.

Nach dem Verschließen des Autoklaven wurde zweimal evakuiert auf jeweils 0,2 bar, wobei dazwischen mit Intertgas entspannt wurde. Nach dem zweiten Evakuieren wurden 570 Gew.-Teile Vinylchlorid zugegeben. Der so vorbereitete Ansatz wurde dann unter Rühren (Impeller mit 130 min$^{-1}$) auf 59° C aufgeheizt. Nach einer Laufzeit von 6³/₄ Stunden unter dem autogenen VC-Druck erfolgt ein Druckabfall um 1,5 bar. Zu diesem Zeitpunkt wurde durch Entspannen die Polymerisation abgebrochen. Nach dem Druckausgleich wurde das restliche VC durch weiteres Aufheizen auf 70 bis 75° C abgetrieben, wobei schließlich für die Dauer von 2 Stunden ein Vakuum von 0,4 bar angelegt wurde. Dieser Vorgang hatte mit entsprechender Vorsicht unter Drosselung des Gasabstroms zu geschehen, um ein unerwünschtes Überschäumen zu vermeiden. Nach 2 Stunden wurde entspannt und das resultierende Suspensions-PVC in herkömmlicher Weise durch Filtrieren bzw. Abschleudern, Waschen und Trocknen aufgearbeitet. Das schleuderfeuchte Produkt hatte nach dem zweistündigen Entgasen einen gaschromatographisch bestimmten Rest-VC-Gehalt von 200 ppm, bezogen auf das Gewicht. In Tabelle 1 sind die Werte der Produktanalysen zusammengestellt. Der Autoklav mußte nach Beendigung der Polymerisation mit einem Hochdruckwasserreinigungsgerät gereinigt werden.

Beispiel 1

Der im Vergleichsversuch A angeführte Ansatz wurde mit der Änderung wiederholt, daß hier ein PVAL als Dispersionsstabilisator eingesetzt wurde, der durch saure Hydrolyse (konzentrierter HCl als Katalysator) des in Vergleichsversuch A als Ausgangsmaterial verwendeten Polyvinylacetat erhalten wurde. Das PVAC hatte wie oben einen osmotisch gemessenen Durchschnittspolymerisationsgrad von 500. Für den daraus durch Säurehydrolyse nach dem in der Beschreiben angeführten Verfahren hergestellten PVAL wurde ein Hydrolysegrad von 75 Mol-% und eine Viskosität von 3,2 mPas (4gewichtsprozentige wäßrige Lösung bei 20° C nach Höppler) gemessen.

Das so hergestellte Suspensions-PVC unterschied sich von dem des Vergleichsversuchs im Feinanteil und in den thermischen Eigenschaften. Die Produktanalyse ist ebenfalls in Tabelle 1 aufgeführt.

Nach dem im Vergleichsversuch A angegebenen Entgasungsprozeß hatte das schleuderfeuchte Produkt einen Rest-VC-Gehalt von 100 ppm. Beim Anlegen von Vakuum war gegenüber dem Vergleichsbeispiel vermindertes Schäumen zu beobachten, so daß der Abgasstrom deutlich weniger gedrosselt werden mußte. Die Autoklavenwandung war praktisch frei von Verunreinigungen, so daß eine einfache Wasserspülung zur Reinigung des Autoklaven ausreichte.

Beispiel 2

Ohne weitere Autoklavenreinigung wurde Beispiel 1 wiederholt mit einem gleichteiligen Gemisch zweier Polyvinylalkohole mit unterschiedlichen Hydrolysegraden anstelle des reinen PVAL mit einem Hydrolysegrad von 75 Mol-%. Beide PVAL sind wiederum aus dem in Vergleichsversuch A und Beispiel 1 angeführten Polyvinylacetat durch Säurehydrolyse hergestellt worden. Sie hatten Hydrolysegrade von 68 Mol-% bzw. 75 Mol-%, so daß sich bei gleichen Gewichtsanteilen ein mittlerer Hydrolysegrad von 72 Mol-% ergab. Das entsprechend hergestellte S-PVC unterschied sich nur unwesentlich von dem nach Beispiel 1 erhaltenen Polymerisat. Auch im vorliegenden Fall zeigte sich ein vermindertes Schaumverhalten beim Entgasen des Polymerisationsansatzes. Für weitere Polymerisationsansätze mußte der Autoklav nicht gereinigt werden.

Die Eigenschaften des Produktes sind ebenfalls in Tabelle 1 angeführt.

Tabelle 1

| Beisp. Nr. Vgl.-ver-such | Polyvinylalkohol | | Polym. zeit | Siebanalyse | | | | | | | | Staub-test | R-G | Poro-sität | Preß-Stab. | | Ofen-Stab. | |
|---|---|---|---|---|---|---|---|---|---|---|---|---|---|---|---|---|---|---|
| | Gew.-% bezogen auf VC | Hydro-lyse-grad mol% | h | 0,5 | 0,3 | 0,25 | 0,2 | 0,15 | 0,1 | 0,06 | D | Gew.-% | g/l | cm$^3$/g | 180° | 190° | Rez. A mm | Rez. B mm |
| A | 0,4 | 76 | 6,75 | 0 | 0 | 0,4 | 0,4 | 1,6 | 40,0 | 45,6 | 12,0 | 1,7 | 500 | 0,295 | 59,6 | 37,5 | 84 | 97 |
| 1 | 0,4 | 75 | 6,75 | 0 | 0,8 | 14,0 | 44,8 | 35,6 | 4,8 | 0 | 0 | 0,0 | 543 | 0,215 | 77,1 | 49,8 | 95 | 108 |
| 2 | 0,2 | 68 | 7,0 | 0 | 1,2 | 15,6 | 42,0 | 35,6 | 5,6 | 0 | 0 | 0,0 | 543 | 0,210 | 78,5 | 53,3 | 98 | 111 |
| | 0,2 | 75 | | | | | | | | | | | | | | | | |

Erläuterungen:

Rez. A:
100 Gew.Tl. S-PVC
0,5 Gew.Tl. 3-bas. Pb-sulfat
0,8 Gew.Tl. Pb-stearat
0,2 Gew.Tl. Ca-stearat

Rez. B:
100 Gew.Tl. S-PVC
35 Gew.Tl. Di-2-äthylhexylphthalat
1 Gew.Tl. Pb-stearat/-sulfat

Siebanalyse:
Gew.-%-Siebrückstand bei Siebweite in mm
D = Siebdurchgang
R-G = Rüttelgewicht

0 032 724

**Patentansprüche**

1. Verfahren zur Herstellung von staubfreiem Polyvinylchlorid mit verbesserten thermischen Eigenschaften durch Homo- oder Copolymerisation von Vinylchlorid gegebenenfalls mit bis zu 40 Gew.-%, bezogen auf Vinylchlorid, weiterer copolymerisierbarer Vinylverbindungen, bzw. im Falle von Propfcopolymeren solche zwischen Vinylchlorid und bis zu 50 Gew.-%, bezogen auf Vinylchlorid, an polymerem Substrat aus einem oder mehreren des vorgenannten Monomeren nach dem Suspensionspolymerisationsverfahren in Gegenwart öllöslicher Radikalinitiatoren und gegebenenfalls weiterer Polymerisationshilfsmittel, dadurch gekennzeichnet, daß als Dispersionsstabilisator ein oder mehrere wasserlösliche(r) Polyvinylalkohol(e) verwendet wird (werden), der (die) durch partielle Solvolyse von Polyvinylacetat in alkoholischer Lösung unter Zusatz eines Säurekatalysators hergestellt wurde(n).

2. Verfahren nach Anspruch 1, dadurch gekennzeichnet, daß das Polyvinylacetat unter Zusatz von wäßriger Mineralsäure solvolysiert wurde.

3. Verfahren nach Anspruch 1, dadurch gekennzeichnet, daß der Polyvinylalkohol einen Hydrolysegrad von 55 bis 85 Mol-% aufweist.

4. Verfahren nach Anspruch 1, dadurch gekennzeichnet, daß der Polyvinylalkohol eine Höppler-Viskosität von 2 bis 30 mPas, gemessen in 4gewichtsprozentiger wäßriger Lösung bei 20°C, besitzt.

5. Verfahren nach Anspruch 4, dadurch gekennzeichnet, daß der Polyvinylalkohol eine Höppler-Viskosität von 2 bis 10 mPas, gemessen in 4gewichtsprozentiger wäßriger Lösung bei 20°C, besitzt.

**Claims**

1. Process for the manufacture of dust-free polyvinyl chloride having improved thermal properties by homopolymerizing or copolymerizing vinyl chloride, optionally with up to 40% by weight, based on the vinyl chloride, of other copolymerizable vinyl compounds, and in the case of graft polymers, of those of vinyl chloride and up to 50% weight, based on vinyl chloride, of a polymer substrate of one or more of the monomers mentioned above, according to the suspension polymerization process, in the presence of oil-soluble radical initiators and, optionally, other polymerization auxiliaries, characterized in that as dispersion stabilizer there is or are used one or more water-soluble polyvinyl alcohol(s) which has or have been manufactured by partially solvolyzing polyvinyl acetate in alcoholic solution with the addition of an acid catalyst.

2. Process according to claim 1, characterized in that the polyvinyl acetate has been solvolyzed with the addition of an aqueous mineral acid.

3. Process according to claim 1, characterized in that the polyvinyl alcohol has a degree of hydrolyses of from 55 to 85 mole-%.

4. Process according to claim 1, characterized in that the polyvinyl alcohol has a Höppler viscosity of from 2 to 30 mPas measured in a 4% by weight aqueous solution at 20°C.

5. Process according to claim 4, characterized in that the polyvinyl alcohol has a Höppler viscosity of from 2 to 10 mPas measured in a 4% by weight aqueous solution at 20°C.

**Revendications**

1. Procédé de préparation de polychlorure de vinyle sans poussières ayant des propriétés thermiques améliorées, par homopolymérisation ou copolymérisation de chlorure de vinyle, éventuellement avec jusqu'à 40% en poids, par rapport au chlorure de vinyle, d'autres composés vinyliques copolymérisables, et, dans le cas de copolymères greffés, de copolymères greffés de chlorure de vinyle avec jusqu'à 50% en poids, par rapport au chlorure de vinyle, d'un substrat polymère d'un ou plusieurs des monomères mentionnés ci-dessus, par polymérisation en suspension en présence d'inducteurs radicalaires oléosolubles et éventuellement d'autres adjuvants de polymérisation, caractérisé en ce que l'on utilise en tant que stabilisant de dispersion un ou plusieurs alcool polyvinyliques solubles dans l'eau, qui ont été préparés par solvolyse partielle de polyacétate de vinyle en solution alcoolique en présence d'un catalyseur acide.

2. Procédé selon la revendication 1, caractérisé en ce que le polyacétate de vinyle a été solvolysé sous addition d'un acide minéral aqueux.

3. Procédé selon la revendication 1, caractérisé en ce que l'alcool polyvinylique présente un degré d'hydrolyse de 55 à 85% molaire.

4. Procédé selon la revendication 1, caractérisé en ce que l'alcool polyvinylique possède une viscosité Höppler de 2 à 30 mPa · s, mesurée dans une solution aqueuse à 4% en poids à 20°C.

5. Procédé selon la revendication 4, caractérisé en ce que l'alcool polyvinylique possède une viscosité Höppler de 2 à 10 mPa · s, mesurée dans une solution aqueuse à 4% en poids à 20°C.